# EUROPEAN PATENT SPECIFICATION

(11) **EP 1 816 149 B1**
(45) Date of publication and mention of the grant of the patent: **01.04.2009**
(21) Application number: 06101274.6
(22) Date of filing: 03.02.2006
(51) Int. Cl.: C08F 297/04

(54) **Process for making a coupled low vinyl block copolymer composition and the resulting composition**
Verfahren zur Herstellung einer gekuppelten Blockcopolymer-Zusammensetzung mit niedrigem Vinylgehalt und die erhaltene Zusammensetzung
Procedé pour la production d'une composition des copolymères en masse couplée avec une teneur vinylique faible

(43) Date of publication of application: 08.08.2007
(73) Proprietor: KRATON Polymers Research B.V., 1030 BH Amsterdam (NL)
(72) Inventor: Dijk van, Cornelis Martinus, 1030 BH, Amsterdam (NL); Hageman, Mark, 1030 BH, Amsterdam (NL)
(74) Representative: Kortekaas, Marcel C.J.A.

(56) References cited:
- WO-A-20/04106399

## Description

### Technical field

This invention relates to a process for making a coupled low vinyl styrenic block copolymer composition and the resulting composition. More in particular, the invention relates to the preparation of low vinyl styrenic block copolymer compositions that are near identical to block copolymer compositions made using dibromoethane as coupling agent.

### Background art

Styrenic block copolymers are polymers based on styrene or similar alkenyl arenes having 8 to 18 carbon atoms and on butadiene, isoprene or similar conjugated dienes having 5 to 12 carbon atoms. These copolymers have separate blocks that are different in composition. Styrenic block copolymers may be thermoplastic elastomers, but may also be resinous in behaviour. Block copolymers having two or more blocks of polystyrene (or similar) may be made by preparation of each of these blocks in sequence during anionic polymerization. However, a very common process for the making of e.g. a styrene-butadiene-styrene block copolymer is by making a living diblock copolymer styrene-butadiene-lithium, and then coupling this living diblock copolymer with a coupling agent.

Linear coupled block copolymers have been made using dibromoethane (DBE) as coupling agent. DBE is a difunctional coupling agent, with a high coupling efficiency, in the order of 83-85%. Unfortunately, DBE results in the trace presence of bromine-containing contaminants. There is therefore a need for block copolymers that can be used as drop-in for existing polymers made with DBE, without the need for reformulation work and without the disadvantage of these bromine-containing contaminants.

From WO 03102032 a process is known for making a coupled block copolymer having a substantial linear character, comprising the steps of: a) reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkoxysilane coupling agent having the formula Si-(OR)₄, where R is selected from linear and branched alkyl radicals, and where the molar ratio of Si to Li is between 0.4 and 0.55.

From WO 2004106399 a similar process is known for making a coupled block copolymer composition having substantial linear character, comprising the steps of: a) reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkoxysilane coupling agent having the formula R-Si-(OR')₃, where R is selected from aryl radicals having from 6 to 12 carbon atoms, or linear alkyl and branched alkyl radicals having from 1 to 12 carbon atoms, and R' is selected from linear alkyl radicals having from 1 to 4 carbon atoms, and where the molar ratio of Si to Li is between 0.35 and 0.7.

The preferred alkoxysilane coupling agent in the first reference is tetraethoxysilane (TEOS), the preferred alkoxysilane coupling agents in the second and more recent reference are methyltrimethoxysilane (MTMS) and isobutytrimethoxysilane (iBTMO). The use of these coupling agents has been found to be result in a coupled block copolymer composition that is substantially linear in nature; which is surprising given the fact that these coupling agents have a functionality greater than 2. According to the second reference, the most preferred alkoxysilane is MTMS.

The block copolymers made in these references hence exhibit a high linear character, as may be concluded on the very low content of uncoupled diblock material, the very low content of 4-arm block copolymer, and the abundance of linear coupled block copolymer. It should also be noted that the use of MTMS and iBTMO results in the near absence of side-products such as INT and HMP. INT is intermediate in molecular weight polymer that was likely formed via termination mechanisms that occurred during the course of the Step II polymerization (these polymer chains were not living at the time of addition of the coupling agent). HMP is high molecular weight polymer (it is higher in MW than the 4-arm block polymer; HMP may come from the coupling of Si centers via an etherification reaction (Si-O-Si).

The block copolymers made in these references have a high vinyl content (about 40%). Vinyl content refers to the fraction of conjugated diene that is built into the polymer backbone by using only one of the C=C links (e.g., 1,2-polybutadiene or 3,4-polyisoprene). A high vinyl content is required for block copolymers that are used for the preparation of selectively hydrogenated block copolymers. During hydrogenation, the polybutadiene that is the midblock of a styrene-butadiene-styrene block copolymer is transferred into a random ethylene-butylene copolymer that is elastic in nature. If using a block copolymer with a low vinyl content (e.g., 15% or less), then the hydrogenated midblock will be very similar to polyethylene, and hence no longer elastic in nature. These block copolymers having a high vinyl content are therefore made by polymerizing the conjugated diene in the presence of an ether, such as diethyl ether; a diether, such as 1,2-diethoxypropane, or an amine as a microstructure modifier.

Although the problem of finding a replacement for DBE would therefore appear to have been solved by using MTMS, it now appears that at low vinyl content of the block copolymer, MTMS is not an ideal substitute. In fact, despite the fact that DBE is a difunctional coupling agent, it appears that some higher molecular weight material is made nonetheless when preparing coupled, low vinyl block copolymer compositions using DBE. On the other hand, such higher molecular weight material is absent in the product made with MTMS. In other words, although the finding of a substitute for the high vinyl block copolymer compositions, e.g., based on living polymers made in the presence of a microstructure modifier, has been solved, the ideal substitute when making a coupled, low vinyl block copolymer composition that is a real drop-in for DBE-coupled, low vinyl block copolymer compositions has not. In addition, an ideal drop-in should result in a product having a coupling efficiency similar to what is obtained using DBE.

It would be highly desirable to identify a halogen-free coupling agent that in the production of low vinyl styrenic block copolymers could be used as replacement for DBE, whilst at the same time resulting in a coupled, low vinyl block copolymer composition that is near identical in content of uncoupled, coupled linear, INT and HMP material.

### Disclosure of the invention

The present invention broadly encompasses a process for making a coupled block copolymer composition, comprising the steps of:
a) reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkyltrialkoxysilane coupling agent having the formula R-Si-(OR')₃, where R is selected from branched alkyl radicals having from 3 to 12 carbon atoms, and R' is a methyl group, and where the molar ratio of Si to Li is between 0.35 and 0.7, thereby forming a coupled block copolymer composition; and
b) recovering the resulting coupled block copolymer composition.

The present invention also encompasses the resulting block copolymer compositions made using the branched alkyltrimethoxysilanes of the process.

### Mode(s) for carrying out the invention

In one embodiment, the present invention is a process which includes a step of reacting a living lithium-terminated polymer having the formula P-Li where P is a block copolymer chain of one or more conjugated dienes having 4 to 12 carbon atoms and one or more mono alkenyl arenes having 8 to 18 carbon atoms with the alkoxysilane coupling agent.

The preferred acyclic conjugated dienes that can be polymerized into the polymer chain P of the present invention are those containing 4 to 8 carbon atoms. Examples for such conjugated dienes are1,3-butadiene (termed "butadiene" in the claims and elsewhere in the specification), 2,3-dimethyl-1,3butadiene, piperylene, 3-butyl-1,3-octadiene, isoprene, 2-phenyl-1,3-butadiene.

Mono alkenyl arenes that can be polymerized together with the dienes to form the polymer chain P are preferably those selected from the group of styrene, the methylstyrenes, particularly 3-methylstyrene, the propylstyrenes, particularly 4-propylstyrene, the butyl styrenes, particularly p-t-butylstyrene, vinylnapthalene, particularly 1-vinylnapthalene, cyclohexylstyrenes, particularly 4-cyclohexylstyrene, p-tolylstyrene, and 1-vinyl-5-hexylnaphthalene.

The presently preferred monomers are isoprene, 1,3-butadiene and styrene. The presently preferred polymer chains P are those where the conjugated dienes are present in a major amount and the mono vinyl-substituted arenes are present in a minor amount. It is preferred that the mono alkenyl arene content be from 5 to 50 weight percent of the total block copolymer, more preferably from 10 to 35 weight percent.

Preferably, polymer chain P has a structure A-B- or B-A-B- or A-B-B'- so that B or B' is attached to the coupling agent, and in which A represents a block of mono alkenyl arenes, preferably a polystyrene block, and B and B' represent different blocks that confer rubbery properties to the polymer chain, such as a poly conjugated diene block, a copolymer block of a conjugated dienes, a copolymer block of a conjugated diene and a mono alkenyl-substituted arene (in which case the total content of mono alkenyl-substituted arene may be up to 70 weight percent), or a combination of such blocks. Such a polymer exhibits properties both of an elastomer and of a thermoplastic polymer. Therefore, such polymers can be formed into articles by standard procedures known for producing articles from thermoplastic polymers while the finished article exhibits elastomeric properties.

In an alternative embodiment, the mono alkenyl-substituted are present in a major amount, thus resulting in a polymer that exhibits the properties of a toughened polystyrene.

It is generally important to control the molecular weight of the various blocks. For each A block the desired block weights are 3 to 60 kg/mole, preferably 5 to 50 kg/mole. For each B or B' block the desired block weights are 20 to 200 kg/mole, preferably 20 to 150 kg/mole. These molecular weights are most accurately determined by light scattering measurements, and are expressed as number average molecular weights.

The present invention is particularly relevant in the preparation of block copolymers wherein the vinyl content is not elevated by the presence of a microstructure modifier.

The quantity of coupling agent employed with respect to the quantity of living polymers P-Li present depends largely upon the degree of coupling and the properties of the coupled polymers desired. Thus, the coupling agent defined above will be employed in a range of from 0.3 to 1.0 moles of coupling agent per mole of lithium, P-Li, more preferably from 0.35 to 0.7 moles of coupling agent based upon the moles of lithium present in the polymer, P-Li, most preferably from 0.4 to 0.5 moles of coupling agent per mole of lithium, P-Li. At lower silicon coupling agent to lithium chain end molar ratios Si/Li (mol/mol), there is not enough coupling agent present to allow high levels of coupling; the coupling efficiency will start to decline if lower Si/Li molar ratios are employed. Lower levels of coupling will tend to lead to a block copolymer product having less strength; the unlinked arms tend to dilute out the strength forming network in the block copolymer. A further problem with using lower Si/Li molar ratios is that at high conversion it will tend to advance the coupling reaction to make higher levels of 4-arm coupled product. The 4-arm coupled product is not preferred as it can contribute to excessive viscosity in the melt which makes melt processing of the product more difficult. Lower Si/Li (mol/mol) ratios are also not preferred because they can lead to weaker products that are more difficult to melt process.

On the other hand, Si/Li (mol/mol) ratios in excess of 0.7 are also not preferred. At Si/Li (mol/mol) = 0.5, there is sufficient coupling agent present to couple all of the chain ends into a linear, 2-arm product; this is the preferred result. Higher levels of Si/Li (mol/mol) only result in the addition of excess coupling agent. The addition of excess reagent contributes added cost to the process without an advantage in the quality of the coupled polymer. At ratios greater than 0.7, the excess coupling agent will tend to cap living chain ends without linking them together; this will contribute to a decline in coupling efficiency at higher Si/Li molar ratios. Lower coupling efficiency will afford block copolymer products having less strength. The use of Si/Li (mol/mol) ratios in excess of 0.7 will unnecessarily increase the cost of the process and will afford lower quality coupled polymers.

As stated above, the coupling agent used in the present invention is an alkoxysilane within the general formula R-Si-(OR')₃, wherein R is selected from branched alkyl radicals, preferably a branched alkyl having 3 to 8 carbon atoms, more preferably having 4 to 6 carbon atoms, and R' is a methyl group. The preferred alkoxysilane is isobutyltrimethoxysilane ("iBTMO"). Note that it came as a surprise that iBTMO does result in a composition similar to what is produced using DBE, as its behaviour when producing high vinyl coupled block copolymers was near identical to that of MTMS, and as there was no presence of any HMP material. In other words, iBTMO appears to behave different when producing a coupled, low vinyl block copolymer composition. Note also that other isobutyltrialkoxysilanes are not as suitable either; Material made with isobutyltriethoxysilane had a different composition.

Although coupled block copolymer compositions made with other alkoxysilane coupling agents are not necessarily bad, they are sufficiently different for a user of such block copolymer compositions to notice a difference when formulating an adhesive composition for instance. A change in the high molecular weight material content has a noticeable impact on the melt flow and such.

The temperature at which the coupling reaction is carried out can vary over a broad range and, for convenience, often is the same as the temperature of polymerization. Although the temperature can vary broadly from 0° to 150°C, it will preferably be within the range from 30°C to 100°C, more preferably 55°C to 85°C.

The coupling reaction is normally carried out by simply mixing the coupling agent, neat or in solution, with the living polymer solution. The reaction period is usually quite short, and can be affected by the mixing rate in the reactor. The normal duration of the coupling reaction will be in the range of 1 minute to 1 hour. Longer coupling periods may be required at lower temperatures.

After the coupling reaction, the linked polymers may be recovered, or if desired they may be subjected to hydrogenation, for instance, the selective hydrogenation of the diene portions of the polymer.

The polymer may be separated from the reaction mixture by standard techniques, such as steam stripping or coagulation with a suitable non-solvent such as an alcohol or water. In the case of steam stripping, the polymer crumb may be separated from the volatile solvent by countercurrent flow through a cyclone. In a like manner, the coagulated polymer crumb may be separated from the liquid solvent phase by centrifugation or filtration. Alternatively, the polymer may be recovered by passing the cement through a devolatilizing extruder. Residual solvent and other volatiles can be removed from the isolated polymer by heating, optionally under reduced pressure or in a forced airflow.

As far as the synthesis of the living polymer chain P-Li is concerned, this may be obtained by reacting a mono-functional lithium initiator system with the respective monomer or monomers. This polymerization step can be carried out in one step or in a sequence of steps. In the case where the polymer chain P comprises a random or tapered copolymer block of two or more monomers, the monomers may be simultaneously polymerized with the lithium initiator. In the case where the polymer chain P is a block copolymer comprising two or more homo- or copolymer blocks, these individual blocks can be generated by incremental or sequential monomer addition.

The monomers that are generally employed, as well as the monomers that are preferably used have been defined above in connection with the novel polymers of this invention.

The lithium-based initiator systems used to make the living polymer chain generally have the general formula R" Li wherein R" is a hydrocarbyl radical of 1 to 20 carbon atoms. Examples of such lithium initiators are methyllithium, isopropyllithium, n-butyllithium, sec-butyllithium, t-octyllithium, n-dodecyllithium, n-eicosyllithium, phenyllithium, naphthyllithium, p-tolyllithium, 4-phenylbutyllithium, cyclohexyllithium, and 4-cyclohexyllithium. The amount of the lithium initiator employed depends upon the desired properties of the polymer, particularly the desired molecular weight. Normally, the organomonolithium initiator is employed in the range of from 0.1 to 100 gram millimoles per 100 grams of total monomers.

The polymerization reaction is preferably carried out in the presence of a hydrocarbon diluent. Preferably the hydrocarbon diluent is a paraffinic, cycloparaffinic or aromatic hydrocarbon having from 4 to 10 carbon atoms or a mixture of such diluents. Examples for the diluent are n-hexane, hexanes, n-heptane, heptanes, 2,2,4-trimethylpentane, cyclohexane, cyclopentane, isopentane, benzene and toluene. The reaction is generally carried out with a weight ratio of diluent to monomers exceeding 1. Preferably the diluent is employed in a quantity of from 200 to 1000 parts by weight per 100 parts by weight of total monomers.

The polymerization reaction in step 1 usually occurs within a period of time ranging from a few minutes up to 6 hours. Preferably, the reaction is carried out within a time period of from 10 minutes to 2 hours. The polymerization temperature is not critical and will generally be in the range of from 30°C to 100°C, preferably in the range of 55° to 85° C.

The other object of the present invention comprises coupled block copolymer compositions that are almost identical to compositions made using DBE, without suffering from the presence of bromine-containing contaminants.

The block copolymer composition has a Coupling Efficiency ("CE") of 70 to 98 weight percent, preferably 80 to 90 weight percent. Coupling Efficiency is defined as the proportion of polymer chain ends which were living, P-Li, at the time the coupling agent was added that are linked via the residue of the coupling agent at the completion of the coupling reaction. In practice, Gel Permeation Chromatography (GPC) data is used to calculate the coupling efficiency for a polymer product. The sum of the areas under the GPC curve for all of the coupled species is divided by the sum of the areas under the GPC curve for all of the coupled moieties plus the area under the curve for the starting, uncoupled polymer species. This ratio is multiplied by 100 to convert the coupling efficiency to a percentage value.

Various materials are known to be detrimental to the lithium alkyl initiated polymerization. Particularly, the presence of carbon dioxide, oxygen, water and alcohols should be avoided during an organomonolithium-initiated polymerization reaction of step 1 of this combined process for making the coupled polymers. Therefore, it is generally preferred that the reactants, initiators, and the equipment be free of these materials and that the reaction is carried out under an inert gas such as nitrogen.

### [0037] EXAMPLES

The following examples are provided to illustrate the present invention. The examples are not intended to limit the scope of the present invention and they should not be so interpreted. Amounts are in weight parts or weight percentages unless otherwise indicated.

### [0039] Example 1

In this example a number of selectively hydrogenated styrene/butadiene block copolymers were prepared with a variety of coupling agents according to a standard polymerization recipe. The molecular parameters of the desired polymer is shown below in Table 1, where Step 1 is the polystyrene block (A), SD1 apparent is the styrene equivalent molecular weight of the styrene/butadiene diblock arm (P), which is made in this case in the absence of a microstructure modifier, and CE is coupling efficiency. Coupling Efficiency is defined as the proportion of polymer chain ends which were living, P-Li, at the time the coupling agent was added that are now linked via the residue of the coupling agent at the completion of the coupling reaction.

**Table 1 (Starting recipe for the syntheses described in Example 1.)**

| | **Target Polymer** |
|---|---|
| Step I (kg/mole) | 16.1 |
| SD1 Mw (kg/mole) apparent | 86.0 |
| PSC (%) | 31.0 |
| Vinyl content (%) | ~10 |

The butadiene polymerization was started at 70°C and the temperature was raised adiabatically up to 80°C. After the butadiene addition was stopped, a soak time of 5 minutes was maintained. Following that the coupling agent was added and allowed to react for at least 10 minutes before the polymer cement was sampled.

The following coupling agents were used in the polymerizations:

Comparative: Dibromoethane (DBE)

Comparative: Methyltrimethoxysilane (MTMS)

Inventive: Isobutyltrimethoxysilane (iBTMO)

Comparative: Isobutyltriethoxysilane (iBTEO)

The results of the polymerization experiments are shown below in Table 2, where percentages are expressed as weight percent, CA is coupling agent, CA/Li is the molar ratio of coupling agent to lithium, HPS is homo polystyrene (this is Step I polymer that was terminated by impurities present in the Step II monomer charge; these polymer chains were not living at the time of addition of the coupling agent; for this reason, they are not included in the calculation of coupling efficiency), INT is intermediate in molecular weight polymer that was likely formed via termination mechanisms that occurred during the course of the Step II polymerization (these polymer chains were not living at the time of addition of the coupling agent; for this reason, these polymers were not included in the calculation of coupling efficiency), high molecular weight material includes 3-arm, 4-arm and higher MW material that may come from the coupling of Si centers via an etherification reaction (Si-O-Si); PSC is percent styrene in the entire block copolymer, and Vinyl is the 1,2 content of the butadiene blocks:

| Run # | 1 | 2 | 3 | 4 | *A* | *B* |
|---|---|---|---|---|---|---|
| CA /Li | 0.5 | 0.5 | 0.42 | 0.45 | *0.5* | *0.5* |
| Solids (%) | 16.8 | 10.0 | 10.0 | 14.3 | *17.0* | *17.0* |
| Step I (kg/mole) | 16.0 | 16.3 | 15.8 | 15.8 | *28.8* | *28.3* |
| SD1 (app) Kg/mole | 96.9 | 96.7 | 90.4 | 87.1 | *140.0* | *141.2* |
| Uncoupled Pol. (%) | 13.9 | 6.7 | 15.5 | 44.8 | *6.5* | *7.7* |
| Coupled Linear (%) | 65.9 | 81.3 | 66.0 | 38.3 | *79.3* | *78.6* |
| High MW material (%) | 9.0 | 5.5 | 10.9 | 9.3 | *7.2* | *4.4* |
| HPS (%) | 8.4 | 6.4 | 4.7 | 5.8 | *2.3* | *7.4* |
| INT (%) | 2.8 | 1.7 | 2.6 | 1.8 | *4.7* | *1.9* |
| CE (%) | 84.4 | 92.7 | 83.3 | 51.6 | *93.0* | *91.5* |
| PSC (%) | 31.0 | 31.0 | 31.0 | 31.0 | *24.4* | *28.7* |
| Vinyl (%) | -10 | -10 | ~10 | -10 | *38.7* | *41.7* |

From these data one can conclude that coupling agent iBTMO is the only coupling agent that mimics DBE, both in respect of the coupling efficiency, the linearity and the high molecular weight content. This is the more surprising as iBTMO and MTMS gave near identical results when coupling high vinyl block copolymers, as is shown for runs A and B, taken from WO 2004106399 and related to the production of a high vinyl block copolymer.

## Claims

1. A process for making a coupled, low vinyl block copolymer composition, having a vinyl content of less than 15%, comprising the steps of:
a) reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkyltrialkoxysilane coupling agent having the formula R-Si-(OR')₃, where R is selected from branched alkyl radicals having from 3 to 12 carbon atoms, and R' is a methyl group, and where the molar ratio of Si to Li is between 0.3 and 1.0, thereby forming a coupled block copolymer composition; and
b) recovering the resulting coupled block copolymer composition.

2. The process according to claim 1 wherein said conjugated diene is selected from butadiene and isoprene and said mono alkenyl arene is styrene.

3. The process according to claim 2 wherein P is a block copolymer of styrene and butadiene with the butadiene block being attached to the lithium ion.

4. The process according to claim 3 wherein the styrene block has an average molecular weight of from 3 to 60 kg/mole and said butadiene block has an average molecular weight of from 20 to 200 kg/mole.

5. The process according to claim 4 wherein said alkyltrialkoxysilane has a branched alkyl radical having from 3 to 8 carbon atoms.

6. The process according to claim 4 wherein said alkyltrialkoxysilane has a branched alkyl radical having from 4 to 6 carbon atoms.

7. The process according to claim 4 wherein said alkyltrialkoxysilane is isobutyltrimethoxysilane.

8. The process according to claim 1 wherein the molar ratio of Si to Li is from 0.35 to 0.7, preferably from 0.4 to 0.5.

9. A coupled, low-vinyl block copolymer as made by the process of any one of claims 1 to 6, having a vinyl content of less than 15% (based on the conjugated diene midblock).

## Patentansprüche

1. Verfahren zur Herstellung einer gekoppelten Vinyl Blockcopolymerzusammensetzung mit einem Vinylgehalt von weniger als 15 %, umfassend die Schritte:
(a) des Umsetzens eines lebenden lithiumterminierten Polymers mit der Formel P-Li, wobei P eine Copolymerkette mit wenigstens einem Polymerblock A, der aus einem oder mehreren Monoalkenylarenen mit 8 bis 18 Kohlenstoffatomen zusammengesetzt ist, und wenigstens einem Polymerblock B ist, der aus einem oder mehreren konjugierten Dienen mit 4 bis 12 Kohlenstoffatomen zusammengesetzt ist, mit einem Alkyltrialkoxysilankopplungsmittel mit der Formel R-Si-(OR')₃, wobei R aus verzweigten Alkylradikalen mit 3 bis 12 Kohlenstoffatomen ausgewählt ist und R' eine Methylgruppe ist, und wobei das Molverhältnis von Si zu Li zwischen 0,3 und 1,0 liegt, unter Bildung einer gekoppelten Blockcopolymerzusammensetzung; und
b) des Rückgewinnens der resultierenden gekoppelten Blockcopolymerzusammensetzung.

2. Verfahren gemäß Anspruch 1, worin das konjugierte Dien aus Butadien und Isopren ausgewählt ist und das Monoalkenylaren Styrol ist.

3. Verfahren gemäß Anspruch 2, worin P ein Blockcopolymer aus Styrol und Butadien ist, wobei der Butadienblock an das Lithiumion gebunden ist.

4. Verfahren gemäß Anspruch 3, worin der Styrolblock ein durchschnittliches Molekulargewicht von 3 bis 60 kg/mol und der Butadienblock ein durchschnittliches Molekulargewicht von 20 bis 200 kg/mol aufweist.

5. Verfahren gemäß Anspruch 4, worin das Alkyltrialkoxysilan ein verzweigtes Alkylradikal mit 3 bis 8 Kohlenstoffatomen aufweist.

6. Verfahren gemäß Anspruch 4, worin das Alkyltrialkoxysilan ein verzweigtes Alkylradikal mit 4 bis 6 Kohlenstoffatomen aufweist.

7. Verfahren gemäß Anspruch 4, worin das Alkyltrialkoxysilan Isobutyltrimethoxysilan ist.

8. Verfahren gemäß Anspruch 1, worin das Molverhältnis von Si zu Li 0,35 bis 0,7, vorzugsweise 0,4 bis 0,5 beträgt.

9. Gekoppeltes Blockcopolymer mit niedrigem Vinylgehalt, hergestellt nach dem Verfahren gemäß einem der Ansprüche 1 bis 6, das einen Vinylgehalt von weniger als 15 % (basierend auf dem konjugierten Dienmittelblock).

## Revendications

1. Procédé pour préparer une composition de copolymère séquencé couplé à faible teneur en vinyle, ayant une teneur en vinyle inférieure à 15%, comprenant les étapes consistant à :
a) faire réagir un polymère vivant terminé par lithium de formule P-Li dans laquelle P est une chaîne de copolymère ayant au moins une séquence de polymère A composée d'un ou plusieurs monoalcényl arènes ayant 8 à 18 atomes de carbone et au moins une séquence de polymère B composée d'un ou plusieurs diènes conjugués ayant 4 à 12 atomes de carbone, avec un alkyltrialcoxysilane de formule R-Si-(OR')₃ en tant qu'agent de couplage, R étant choisi parmi les radicaux alkyle ramifiés ayant de 3 à 12 atomes de carbone, et R' un groupe méthyle, le rapport molaire entre Si et Li étant entre 0,3 et 1,0, formant ainsi une composition de copolymère séquencé couplé ; et
b) récupérer la composition de copolymère séquencé couplé résultante.

2. Procédé selon la revendication 1, dans lequel ledit diène conjugué est choisi parmi le butadiène et l'isoprène et ledit monoalcényl arène est le styrène.

3. Procédé selon la revendication 2, dans lequel P est un copolymère séquencé de styrène et de butadiène, la séquence de butadiène étant attachée à l'ion lithium.

4. Procédé selon la revendication 3, dans lequel la séquence de styrène a une masse moléculaire moyenne de 3 à 60 kg/mole et ladite séquence de butadiène a une masse moléculaire moyenne de 20 à 200 kg/mole.

5. Procédé selon la revendication 4, dans lequel ledit alkyltrialcoxysilane a un radical alkyle ramifié ayant de 3 à 8 atomes de carbone.

6. Procédé selon la revendication 4, dans lequel ledit alkyltrialcoxysilane a un radical alkyle ramifié ayant de 4 à 6 atomes de carbone.

7. Procédé selon la revendication 4, dans lequel ledit alkyltrialcoxysilane est l'isobutyltriméthoxysilane.

8. Procédé selon la revendication 1, dans lequel le rapport molaire entre Si et Li est de 0,35 à 0,7, de préférence de 0,4 à 0,5.

9. Copolymère séquencé couplé à faible teneur en vinyle tel que préparé par le procédé selon l'une quelconque des revendications 1 à 6, ayant une teneur en vinyle inférieure à 15 % (par rapport à la séquence médiane diène conjugué).
